Europäisches Patentamt

European Patent Office

Office européen des brevets

(19)

(11) Publication number: **0 090 562**
**B1**

(12)                    **EUROPEAN PATENT SPECIFICATION**

(45) Date of publication of patent specification: **01.10.86**

(51) Int. Cl.⁴: **A 23 F 5/32,** A 23 F 5/26

(21) Application number: **83301530.8**

(22) Date of filing: **18.03.83**

(54) **Method for producing a roast and ground appearing freeze-dried coffee.**

(30) Priority: **30.03.82 US 363716**

(43) Date of publication of application:
**05.10.83 Bulletin 83/40**

(45) Publication of the grant of the patent:
**01.10.86 Bulletin 86/40**

(84) Designated Contracting States:
**DE FR GB IT SE**

(56) References cited:
**CA-A- 980 165**
**FR-A-2 364 620**
**GB-A-1 169 586**
**US-A-3 493 389**
**US-A-3 966 979**

(73) Proprietor: **GENERAL FOODS CORPORATION**
**250 North Street**
**White Plains, N.Y. 10625 (US)**

(72) Inventor: **Desanto, Richard J.**
**24, South Rochdale Avenue**
**Roosevelt New Jersey 08555 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

The present invention relates to a method of producing a freeze-dried soluble coffee. More particularly, the invention involves a method of producing a freeze-dried coffee with a multi-colored appearance resembling that of roast and ground coffee by first separately extracting the atmospherically extractable solids and the hydrolysis solids and the extracts are frozen which frozen extracts are then ground and freeze-dried.

It has long been desired to produce a freeze-dried soluble coffee with an appearance closely resembling that of roast and ground coffee. Much effort has been directed towards producing a dark-colored freeze-dried coffee on the feeling that such a coffee more nearly resembles roast and ground coffee as compared to a light colored freeze-dried coffee. For instance, U.S. Pat. Nos. 3,253,420 of De George, 3,399,061 of Lutz, 3,433,963 of Simon et al., and 3,966,979 of Katz et al., all deal with controlling the freezing rate of coffee extract in order to produce a dark-colored freeze-dried coffee. A similar object is disclosed in commonly assigned U.S. Pat. App. No. 353,280 to Hudak. Inspection of roast and ground coffee, however, reveals that it is comprised of particles exhibiting a variety of colors, ranging between light and dark. Thus, a freeze-dried coffee of one color, albeit a dark color, is less desirable than a multi-colored freeze-dried coffee.

The hereinabove described art relates to freeze drying a typical commercial coffee extract, but at least two different types of coffee extracts are recognized in the art. The first such extract, known as atmospheric extract, is comprised of atmospheric coffee solids leached from roast and ground coffee at a temperature typically less than 100°C and at a pressure close to atmospheric. The second type of extract, so-called hydrolysis extract, is produced after extraction of the atmospheric solids and is extracted at conditions sufficient to hydrolyze and solubilize otherwise insoluble starches and celluloses present in roasted coffee. A typical commercial coffee extract is comprised of both types. Methods of producing the coffee extracts are disclosed in U.S. Pat. No. 2,888,349 of Morrow et al. and U.S. Pat. No. 3,458,320 of Niven. The art has not heretofore revealed the separate treatment of said coffee extracts to produce a novel freeze-dried coffee.

It is an object of the present invention to provide a method of producing a freeze-dried coffee with a multi-colored appearance resembling that of roast and ground coffee.

It is a further object of the present invention to provide a method for producing such a freeze-dried coffee which method takes advantage of the two distinct types of coffee extract.

## Disclosure of the Invention

It has now been discovered that a freeze-dried coffee with a multi-colored appearance resembling that of roast and ground coffee is produced by initially separately extracting the atmospherically extractable solids and hydrolysis solids from roast and ground coffee, the extracts are frozen and the frozen extract is subsequently ground and freeze-dried. The freeze-dried coffee resulting therefrom is a multi-colored product resembling the appearance of roast and ground coffee.

A method of producing a freeze-dried coffee with a multi-colored appearance resembling that of roast and ground coffee which comprises combining differently colored particles of separately dried extracts characterised by:

(a) extracting the atmospherically extractable solids from a charge of roast and ground coffee;

(b) freezing the atmospheric extract obtained in step (a);

(c) freeze drying the frozen atmospheric extract obtained in step (b);

(d) extracting hydrolysis coffee solids from a charge of roast and ground coffee that has previously had the atmospheric coffee solids extracted;

(e) freezing the hydrolysis extract obtained in step (d);

(f) freeze drying the frozen hydrolysis extract obtained in step (e);

(g) combining the freeze-dried atmospheric coffee solids of step (c) with the freeze-dried hydrolysis solids of step (f) by grinding said freeze-dried coffees whereby a uniform mixture of freeze-dried atmospheric coffee particles and freeze-dried hydrolysis coffee particles is produced.

As hereinabove described, roast and ground coffee may be extracted under different conditions to produce two distinct types of extracts. The so-called atmospheric extract is obtained by contacting roast and ground coffee, such as is contained in a typical commercial percolator column, with water at a temperature usually less than 100°C at a pressure typically close to atmospheric said atmospheric extract contains substantially all of the aromatic and flavor compounds generally extractable from roast and ground coffee and is consequently very desirable and flavorful. Hydrolysis extract, on the other hand, is typically produced by contacting the previously extracted roast and ground coffee with water at a temperature in excess of 175°C and at a pressure of about 18 atmospheres. A standard commercial coffee extract contains both the atmospheric and hydrolysis portion although the art, in U.S. Pat. Nos. 2,888,349 of Morrow et al. and 3,458,320 of Niven, for example, disclose methods of obtaining the two extracts separately.

For purposes of the present invention, the two extracts may be obtained from the same or different charges of roast and ground coffee. In the preferred scheme, the roast and ground charge is atmospherically extracted and then separately extracted under hydrolysis conditions in order to obtain the hydrolysis extract. It is possible though, to atmospherically extract the roast and ground coffee and then obtain the hydrolysis extract from a different charge of roast and ground coffee. It is wasteful and hence, expensive to merely atmospherically extract the coffee without also separately extracting the hydrolysis solids and the practice is not recommended.

According to one embodiment of the invention, the coffee extracts are separately frozen and freeze-dried. Freezing is conveniently carried out on a continuous, moving metal belt which is chilled underneath by a series of progressively colder brine reservoirs. This method of freezing is described more fully in U.S. Pat. No. 3,253,420 of De George. The frozen extracts are then freeze-dried according to techniques well known in the art. Freeze drying basically entails heating the frozen coffee material while maintaining a suitably high vacuum whereby water passes directly from the frozen state to the vapor state. It is surprising that the separately freeze-dried coffee extracts are widely different in color; the freeze-dried atmospheric extract is very dark-colored whereas the freeze-dried hydrolysis extract is lighter colored.

The freeze-dried coffee with a multi-colored appearance resembling that of roast and ground coffee is then produced by mixing the separately freeze-dried coffees. It is generally desirable to reduce the size of the freeze-dried coffee to approximately the size of roast and ground coffee particles, as by grinding, and the mixing is conveniently carried out in the same step. The two freeze-dried coffees may be fed concurrently to a grinder which grinder will both reduce the size to particles and provide a uniform mixture of atmospherically extracted and hydrolysis extracted freeze-dried coffee particles. Of course, it is possible to separately grind the coffees and subsequently produce the uniform mixture, as in a ribbon blender but this involves an extra step and is not as convenient.

Another embodiment of the present invention involves layered freezing of the two coffee extracts followed by grinding and freeze-drying. According to this embodiment, one of the extracts, either the atmospheric extract or hydrolysis extract, is frozen as on a continuous, moving metal belt hereinbefore described. Once said extract is frozen, the second extract is placed as a layer thereon whereby it is frozen. It is preferred to freeze the hydrolysis extract as the first layer and to do so rapidly in order to further lighten the color of the hydrolysis solids. The layered, frozen extract is ground, as in a hammer mill, in order to reduce it to particle size as well as provide a uniform mixture of frozen atmospheric extract and hydrolysis extract particles. The ground, frozen coffee extract particles are then dried according to a technique such as disclosed in U.S. Pat. No. 3,365,806 to Pfluger et al. for example, whereby a freeze-dried coffee with a multi-colored appearance resembling that of roast and ground coffee is produced.

At least two freeze-dried coffee particle colorations, common to all embodiments, are produced by the present invention. As hereinbefore described, freeze-dried coffee made from atmospheric extract is very dark-colored whereas hydrolysis freeze-dried coffee is relatively light colored. The present invention, by treating the two extracts differently at least through the layered freezing step, provides the two different colored freeze-dried coffees. A third particle coloration is provided by the embodiment calling for the layered freezing of the two coffee extracts. Particles obtained exclusively from the atmospheric extract portion will be dark-colored, particles obtained solely from the hydrolysis extract portion will be light-colored and, particles obtained from the boundary region of the two layers will have both dark-colored and light-colored faces, providing the third particle coloration. For each of the embodiments of the present invention, the most desirable multi-colored appearance is achieved by producing a freeze-dried coffee comprised of between 40% and 50% by weight atmospheric coffee solids and between 50% and 60% by weight hydrolysis solids. Such a freeze-dried coffee has a sufficient distribution of the different particle colorations to have an appearance resembling that of roast and ground coffee.

The following example illustrates certain aspects of the present invention.

### Example

1. Approximately 9.0 kg of roast and ground coffee was charged to an elongated percolator column.

2. The coffee was atmospherically extracted by passing about 9 litre of water upflow through the coffee at a temperature of 93°C. The resulting approximately 9.0 kg of atmospheric extract had a concentration of about 22% by weight atmospheric coffee solids.

3. The same roast and ground coffee was then extracted for hydroysis solids by passing about 9.0 kg of water upflow through the coffee at a temperature above 150°C. The resulting approximately 9.0 kg of hydrolysis extract had a concentration of about 8.7% by weight hydrolysis coffee solids.

4. Both coffee extracts were adjusted to a solids concentration of 25% by weight solids.

5. Three frozen extract samples were produced by placing the extract as a thin layer in a pan maintained at −10°C. All three of the samples were frozen at the same conditions.

(a) a sample of atmospheric extract was frozen.

(b) a sample of hydrolysis extract was frozen.

(c) a layer of atmospheric extract was frozen and a layer of hydrolysis extract was then frozen by placing it on the frozen atmospheric extract. The weights of atmospheric extract and hydrolysis extract were the same.

6. The three frozen extract samples were freeze-dried in a laboratory freeze dryer maintained at 200 micron pressure and a temperature of 25°C for a period of 20 hours.

7. The three freeze-dried coffee samples were reduced in size by forcing the freeze-dried coffee through an 8 mesh screen (U.S. Standard Sieve Screen). The size-reduced freeze-dried coffee produced from the layered extract was shaken to distribute the different colored particles evenly.

8. The color of the freeze-dried coffee samples was measured according to a scale well known in the art wherein the amount of light reflected by a given sample is compared to the amount reflected by an established standard. A lower color unit number indicated a darker product. This method of measurement was inappropriate for the multi-colored freeze-dried coffee sample which was characterized visually.

The freeze-dried coffee made from the atmospheric extract had a color of 22 color units compared a color of 42 color units for the freeze-dried coffee prepared from the hydrolysis extract. This demonstrates that atmospheric extract produces a substantially darker freeze-dried coffee as compared to the hydrolysis extract. The freeze-dried coffee made from the layered frozen extract was characterized as having the multi-colored appearance resembling that of roast and ground coffee.

## Claims

1. A method of producing a freeze-dried coffee with a multi-colored appearance resembling that of roast and ground coffee which comprises combining differently colored particles of separately dried extracts characterised by:

(a) extracting the atmospherically extractable solids from a charge of roast and ground coffee;

(b) freezing the atmospheric extract obtained in step (a);

(c) freeze drying the frozen atmospheric extract obtained in step (b);

(d) extracting hydrolysis coffee solids from a charge of roast and ground coffee that has previously had the atmospheric coffee solids extracted;

(e) freezing the hydrolysis extract obtained in step (d);

(f) freeze drying the frozen hydrolysis extract obtained in step (e);

(g) combining the freeze-dried atmospheric coffee solids of step (c) with the freeze-dried hydrolysis solids of step (f) by grinding said freeze-dried coffees whereby a uniform mixture of freeze-dried atmospheric coffee particles and freeze-dried hydrolysis coffee particles is produced.

2. The method of Claim 1 wherein the hydrolysis solids are extracted from the roast and ground coffee of step (1a) which has previously been atmospherically extracted.

3. A method of producing a freeze-dried coffee with a multi-colored appearance resembling that of roast and ground coffee which comprises:

(a) extracting the atmospheric coffee solids from a charge of roast and ground coffee;

(b) extracting hydrolysis coffee solids from a charge of roast and ground coffee that has previously been atmospherically extracted;

(c) freezing the atmospheric extract obtained in step (a);

(d) freezing the hydrolysis extract obtained in step (b) by placing a layer of hydrolysis extract on top of the frozen atmospheric extract;

(e) grinding the layered, frozen extract of step (d);

(f) freeze drying the ground, frozen extract of step (e).

4. The method of Claim 3 wherein the hydrolysis solids are extracted from the roast and ground coffee of step 5(a) which has previously been atmospherically extracted.

5. A modification of the method of Claim 3 wherein the hydrolysis extract is frozen before the atmospheric extract which atmospheric extract is frozen by placing a layer of the atmospheric extract on top of the frozen hydrolysis extract.

## Patentansprüche

1. Verfahren zum Erzeugen von gefriergetrocknetem Kaffee von mehrfarbigem Aussehen, das dem von geröstetem und gemahlenem Kaffee ähnelt, wobei verschiedenfarbige Teilchen von getrennt voneinander getrockneten Extrakten vereinigt werden, dadurch gekennzeichnet, daß

(a) aus einer Charge aus geröstetem und gemahlenem Kaffee die unter atmosphärischen Bedingungen extrahierbaren Feststoffe extrahiert werden,

(b) der im Schritt (a) unter atmosphärischen Bedingungen gewonnene Extrakt eingefroren wird,

(c) der im Schritt (b) erhaltene, unter atmosphärischen Bedingungen gewonnene und eingefrorene Extrakt gefriergetrocknet wird;

(d) aus einer Charge aus geröstetem und gemahlenem Kaffee, aus der vorher die unter atmosphärischen Bedingungen extrahierbaren Kaffeefeststoffe extrahiert worden sind, die unter Hydrolysebedingungen extrahierbaren Kaffeefeststoffe extrahiert werden,

(e) der im Schritt (d) unter Hydrolysebedingungen gewonnene Extrakt gefroren wird,

(f) der im Schritt (e) erhaltene, unter Hydrolysebedingungen gewonnene und eingefrorene Extrakt gefriergetrocknet wird; und

(g) die im Schritt (e) erhaltenen, unter atmosphärischen Bedingungen extrahierten und gefriergetrockneten Kaffeefeststoffe mit den im Schritt (f) erhaltenen, unter Hydrolysebedingungen extrahierten und gefriergetrockneten Feststoffe dadurch miteinander vereinigt werden, daß die gefriergetrockneten Kaffeestoffe gemahlen werden, so daß ein einheitliches Gemisch von unter atmosphärischen Bedingungen extrahierten und gefriergetrockneten Kaffeeteilchen und von unter Hydrolysebedingungen extrahierten und gefriergetrockneten Kaffeeteilchen erhalten wird.

2. Verfahren nach Anspruch 1, dadurch gekennzeichnet, daß die unter Hydrolysebedingungen extrahierbaren Feststoffe aus dem im Schritt (1a) verwendeten, gerösteten und gemahlenen Kaffee extrahiert werden, nachdem dieser einer Extraktion unter atmosphärischen Bedingungen unterworfen worden ist.

3. Verfahren zum Erzeugen von gefriergetrocknetem Kaffee von mehrfarbigem Aussehen, das dem von geröstetem und gemahlenem Kaffee ähnelt, wobei verschiedenfarbige Teilchen von getrennt voneinander getrockneten Extrakten vereinigt werden, dadurch gekennzeichnet, daß

(a) aus einer Charge aus geröstetem und gemahlenem Kaffee die unter atmosphärischen Bedingungen extrahierbaren Feststoffe extrahiert werden,

(b) aus einer Charge von geröstetem und gemahlenem Kaffee, der vorher einer Extraktion unter atmosphärischen Bedingungen unterworfen worden ist, die unter Hydrolysebedingungen extrahierbaren Kaffeefeststoffe extrahiert werden,

(c) der im Schritt (a) unter atmosphärischen Bedingungen gewonnene Extrakt eingefroren wird,

(d) eine Schicht des im Schritt (b) unter Hydrolysebedingungen gewonnenen Extrakts oben auf den unter atmosphärischen Bedingungen gewonnenen und eingefrorenen Extrakt aufgebracht und dadurch eingefroren wird,

(e) der im Schritt (d) erhaltene, geschichtete eingefrorene Extrakt gemahlen wird;

(f) der im Schritt (e) erhaltene, eingefrorene und gemahlene Extrakt gefriergetrocknet wird.

4. Verfahren nach Anspruch 3, dadurch gekennzeichnet, daß die unter Hydrolysebedingungen extrahierbaren Feststoffe aus dem im Schritt 5(a) verwendeten, gerösteten und gemahlenen Kaffee extrahiert werden, der vorher einer Extraktion unter atmosphärischen Bedingungen unterworfen worden ist.

5. Abänderung des Verfahrens nach Anspruch 3, dadurch gekennzeichnet daß der unter Hydrolysebedingungen gewonnene Extrakt vor dem unter atmosphärischen Bedingungen gewonnenen Extrakt eingefroren wird, der dadurch eingefroren wird, daß eine Schicht aus dem unter atmosphärischen Bedingungen gewonnenen Extrakt oben auf den unter Hydrolysebedingungen gewonnenen und eingefrorenen Extrakt aufgebracht wird.

**Revendications**

1. Procédé de fabrication d'un café lyophilisé à aspect multicolore ressemblant à celui de café torréfié et moulu qui comprend la combinaison de particules colorées différemment d'extraits séchés séparément, caractérisé en ce que:

(a) on extrait d'une charge de café torréfié et moulu les solides susceptibles d'extraction atmosphérique;

(b) on congèle l'extrait atmosphérique obtenu lors de l'opération (a);

(c) on lyophilise l'extrait atmosphérique congelé obtenu lors de l'opération (b);

(d) on extrait les solides de café d'hydrolyse d'une charge de café torréfié et moulu dont les solides de café atmosphériques ont été préalablement extraits; 

(e) on congèle l'extrait d'hydrolyse obtenu lors de l'opération (d);

(f) on lyophilise l'extrait d'hydrolyse congelé obtenu lors de l'opération (e);

(g) on combine les solides de café atmosphériques lyophilisés selon l'opération (c) avec les solides d'hydrolyse lyophilisés selon l'opération (f) en moulant lesdits cafés lyophilisés ce qui donne un mélange uniforme de particules de café atmosphériques lyophilisées et de particules de café d'hydrolyse lyophilisées.

2. Procédé selon la revendication 1, dans lequel on extrait les solides d'hydrolyse du café torréfié et moulu selon l'opération (1a) ayant préalablement subi une extraction atmosphérique.

3. Procédé de fabrication d'un café lyophilisé à aspect multicolore ressemblant à celui de café torréfié et moulu qui comprend:

(a) l'extraction des solides de café atmosphériques à partir d'une charge de café torréfié et moulu;

(b) l'extraction des solides de café d'hydrolyse à partir d'une charge de café torréfie et moulu ayant préalablement subi une extraction atmosphérique;

(c) la congélation de l'extrait atmosphérique obtenu lors de l'opération (a);

(d) la congélation de l'extrait d'hydrolyse obtenu lors de l'opération (b) opérée en plaçant une couche d'extrait d'hydrolyse par dessus l'extrait atmosphérique congelé;

(e) la mouture de l'extrait congelé en couches selon l'opération (d);

(f) la lyophilisation de l'extrait moulu congelé selon l'opération (3).

4. Procédé selon la revendication 3, dans lequel on extrait les solides d'hydrolyse du café torréfié et moulu selon l'opération 5(a) ayant préalablement subi une extraction atmosphérique.

5. Procédé selon la revendication 3, dans lequel on congèle l'extrait d'hyrolyse avant l'extrait atmosphérique, lequel extrait atmosphérique est congelé par disposition en couche par dessus l'extrait d'hydrolyse congelé.